# EUROPEAN PATENT SPECIFICATION

(11) **EP 0 377 865 B1**
(45) Date of publication and mention of the grant of the patent: **30.10.1996**
(21) Application number: 89123370.2
(22) Date of filing: 18.12.1989
(51) Int. Cl.: B23Q 3/155, B21D 37/14, B23D 35/00, B21D 28/04

(54) **Punching and nibbling machine fitted with a device for an automatic quick tool change**
Stanz- und Nibbel-Maschine mit automatischer Werkzeugschnellwechselvorrichtung
Machine à découper et grignoter avec dispositif automatique de changement rapide d'outils

(30) Priority: 11.01.1989 IT 1240489
(43) Date of publication of application: 18.07.1990
(73) Proprietor: Piccini, Giancarlo, I-16033 Lavagna (IT); Costa, Pietro, I-16010 Sant'Olcese (IT)
(72) Inventor: Piccini, Giancarlo, I-16033 Lavagna (IT); Bassich, Fulvio, I-16144 Genova (IT); Costa, Pietro, I-16010 Sant'Olcese (IT)
(74) Representative: Porsia, Bruno

(56) References cited:
- EP-A- 0 180 823
- EP-A- 0 276 391
- FR-A- 2 554 034
- FR-A- 2 603 825
- GB-A- 2 079 235

## Description

The invention relates to a punching and nibbling machine according to the pre-characterizing part of claim 1.

A machine of this kind is known from the document EP-A-0241933. Such a machine is formed with a main tool magazine fitted with only one conveyor means for carrying pairs of tools consisting each of an upper tool and an underlying, matching counter-tool which are already coupled with each other. One of these tool pairs as a whole, i.e., the assembly of a tool coupled with the relative counter-tool, is each time inserted into the machine in working position. For this purpose, the selected pair of tools is brought by the conveyor means into a position located beside the working position of the machine, that is, into a stand-by position in which the tool and counter-tool axes are not aligned with the operative axis of the machine. Thereafter, this pair of tools is withdrawn from the conveyor means by a suitable tool-transferring device and is inserted into the machine in a working position which is coaxial with the operative axis of the machine. In order to change the pair of tools in the machine, the tool-transferring device should then withdraw from working position the tool pair formed by a tool and a counter-tool, and put down this tool pair on the conveyor means. This conveyor means is subsequently so moved that the required new tool pair formed by another tool and a matching countertool is brought into stand-by position, from which this new pair of tools is withdrawn by the tool-transferring device and put down in the machine in working position. These operations are altogether time-consuming.

The present invention aims to provide a punching and nibbling machine according to the pre-characterizing part of claim 1, which affords a quicker tool-change operation.

The invention attains this object by the provision of the features according to the characterizing part of claim 1, that is, by the combination of the following features:
a) two main magazines are provided, one for the dies, and one for the punches,
b) each magazine is provided with an associated conveyor means carrying only the dies, respectively only the punches.
c) the path of each conveyor means has a path section along which the corresponding tools (dies and punches) pass through a position in which a punch and a die are arranged in a vertically overlying relation, and their axes are aligned with the operative axis of the machine.

Owing to these features of the punching and nibbling machine, a tool change can be effected at a very high speed, with a simpler and space-saving construction of the machine.

The conveyor means for either of the tool magazines preferably comprise each a pair of chains, or any like means, such as toothed belts, which carry a plurality of interspaced grippers respectively holding a die or punch cartridge. The said chains that are slightly offset from each other, are caused to circulate in parallel planes, so that the tools are conveyed with a fixed direction of their axes being maintained. Since the tools are prevented from being upturned, the provision of cartridge-and-tool clamping means is not necessary, which helps to a simplified construction of the tool magazines.

The grippers carried by the said chains are operatively associated with a gripper closing and opening device, whereby the grippers are each allowed to release the die or punch cartridge held thereby, as soon as the die or the punch has been set in position on the operative axis of the machine, so that this tool can be connected with the respective die or punch holding unit of the punching and nibbling machine, generally by hydraulically operated locking means. The concerned gripper is being held in opened condition close to the relative die or punch, for the whole operative time of this tool, and on the tool operative time being at an end, this gripper is returned to its closed position, so that it is caused to seize again the die or punch to be changed.

The possibility of associating an additional tool magazine located outside of the punching and nibbling machine with either of the tool magazines located inside the same, is provided by the invention. The dies and the punches are automatically transferred by a translating turntable device from their external die or punch magazine to the respective die or punch magazine located inside the machine. Thanks to these additional tool magazines, a practically unlimited number of automatically changeable tools is available for the punching and nibbling machine according to the invention.

These and other features of the machine according to the invention, and the advantages arising therefrom will clearly appear in the following detailed description of one preferred embodiment thereof, made by way of a non-limiting example, by referring to the annexed sheets of drawing, in which:
Figure 1 is a diagrammatic front elevational view of a punching and nibbling machine according to the invention, which is provided with two overlying magazines for changing the tools.
Figure 2 is a side elevational view of the said machine.
Figure 3 is a vertical sectional view showing the die holding unit of the said punching and nibbling machine, and the relative die magazine.
Figure 4 is a top plan view of the die holding unit and the die magazine according to Figure 3.
Figure 5 is a vertical sectional view showing the punch holding unit of the said punching and nibbling machine, and the relative punch magazine.
Figures 6 and 7 show more in detail the said punch holding unit, respectively in punch locking and punch unlocking position.
Figure 8 is a front elevational view of the said punching and nibbling machine, in which two additional magazines respectively for a set of dies and a matching set of punches, are associated therewith, and
Figure 9 is a diagrammatic top plan view showing one of the said additional die or punch magazines.

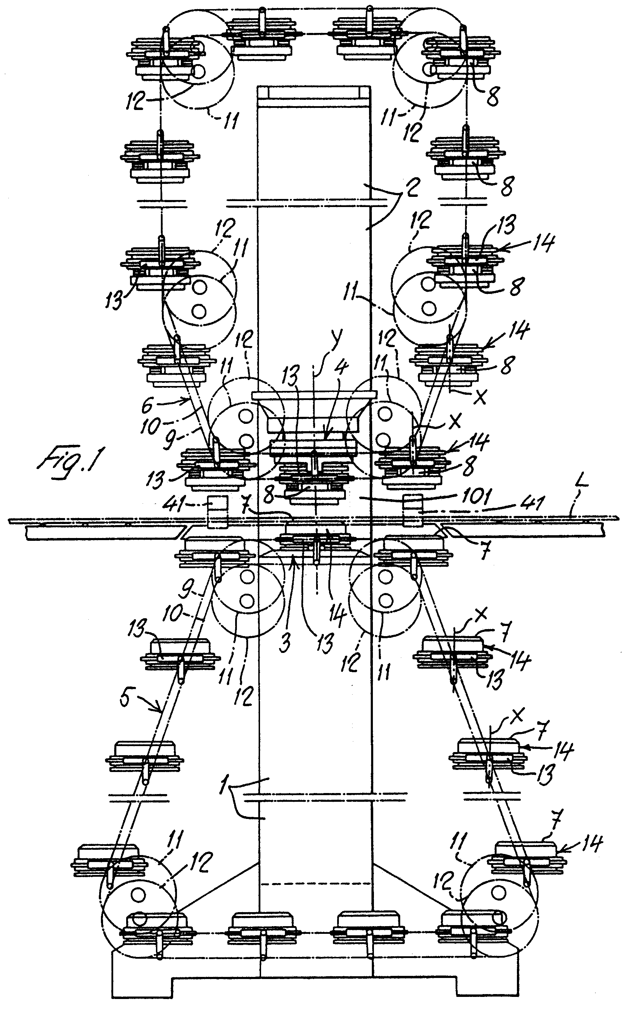

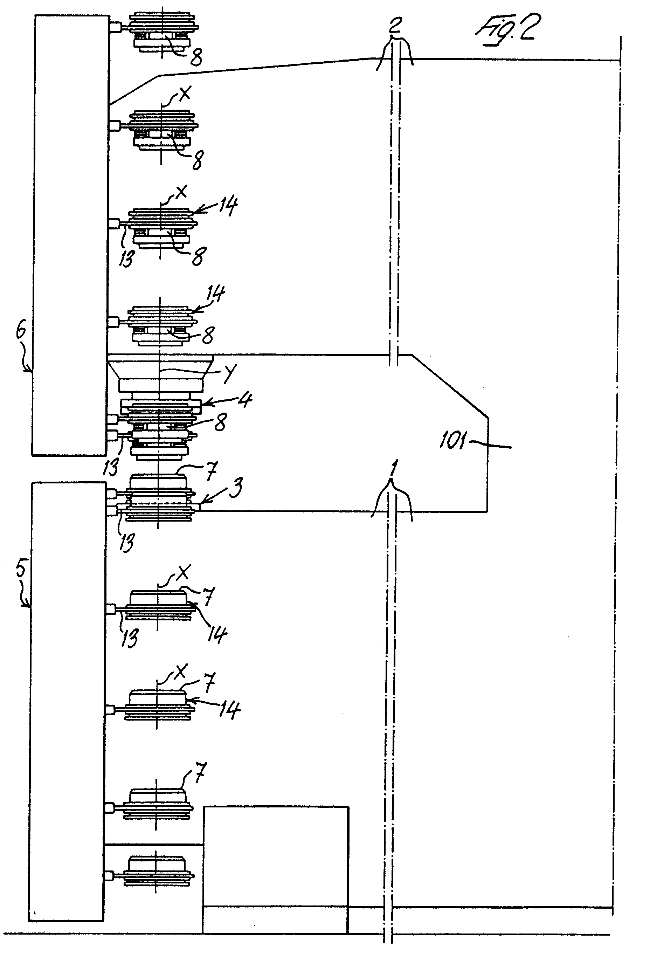

Shown in Figures 1 and 2 is a sheet-working punching and nibbling machine, and its typically C-shaped main frame comprises a base frame 1, with a long overhanging frame 2 lying thereover, which by means of an upstanding short member 101 is supported at one end by the said base frame 1.

The base frame 1 carries at its upper free end a stationary die holding unit designated as a whole by numeral 3, and the overhanging frame 2 supports a respective punch holding unit 4, arranged in a co-axial relation with the die holding unit 3, and which is to be moved up and down along the common axis Y, so that both tools, i.e., a punch and a die, are caused to cooperate with each other.

According to the invention, the punching and nibbling machine is fitted with an automatic tool change device which consists of two tool magazines 5 and 6 respectively carrying a set of dies 7 and a matching set of punches 8.

The tool magazines 5 and 6 which are set in an overlying relation, and extend vertically and transversely to the machine main frame, are each provided with conveyor means for bringing the selected pair of tools into working position, in which the tool axis X is caused to coincide with the axis Y of the respective die or punch holding unit 3, 4. The said conveyor means are so provided that the tools are moved along a closed path, with their axes X being held in a plane passing through the axis Y of the die or punch holding units 3, 4, and lying preferably across the main frame of the punching and nibbling machine.

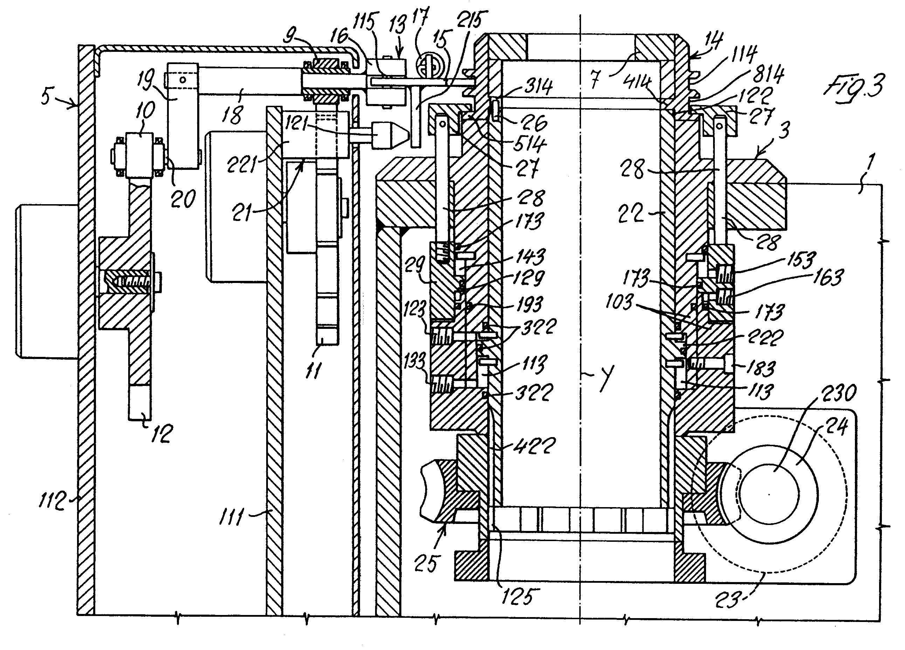

In one preferred embodiment (see also Figures 3, 4, and 5), the means for conveying the relative tool magazine 5, 6 comprise a pair of chains 9 and 10 lead over respective gear wheel units 11 and 12. The said gear wheel units are fitted on parallel vertical plates 111 and 112 arranged on the front side of the punching and nibbling machine, transversely to the machine main frame. The gear wheels of the one unit are a little offset vertically relative to the gear wheels of the other unit, whereby either chains can be guided along identical closed paths, however offset from each other.

Fixed to the chains 9 and 10 in each tool magazine 5, 6 is a plurality of suitably spaced apart grippers 13 which are apt to seize and release a respective die or punch cartridge 14, in which a single die 7 or a single punch 8 is housed. Each gripper 13 preferably comprises a pair of gripper members 15 which at 115 are fulcrumed about a supporting crosspiece 16, and are interconnected by a spring 17 tending to swing the gripper members 15 the one toward the other. Such a swinging movement of the gripper members 15 is restrained by two inwardly extending levers 215 secured to the gripper members 15 close to the crosspiece 16, and which under the bias of spring 17, are caused to abut against a respective boss 116 on the said crosspiece 16, so that the gripper members 15 are kept in their properly opened out condition. The crosspiece 16 is in turn attached to one end of a rod 18 carried by the one chain 9, while the other end of this rod 18 is connected through an intermediate link 19 to a pivot 20 fitted on the other chain 10.

The connection of a die or punch cartridge 14 with a pair of gripper members 15 is made by causing this pair of gripper members 15 to be engaged in an annular groove 114 in the die or punch cartridge 14, so that owing to the bias of spring 17, the said pair of gripper members 15 will hold the respective die or punch cartridge 14 by clamping it therebetween. The cartridge 14 engaged by a pair of gripper members 15 is prevented from turning round, since it is provided with an outwardly projecting radial pin 214 which comes to be fitted into a matching recess 315 formed in one of the two gripper members 15.

Close to the respective die or punch holding unit 3, 4, each die or punch magazine 14 is provided with a device 21 for opening the gripper members 15, which merely consists of a frustoconical head 121 driven by a hydraulically or pneumatically operated double-acting piston 221.

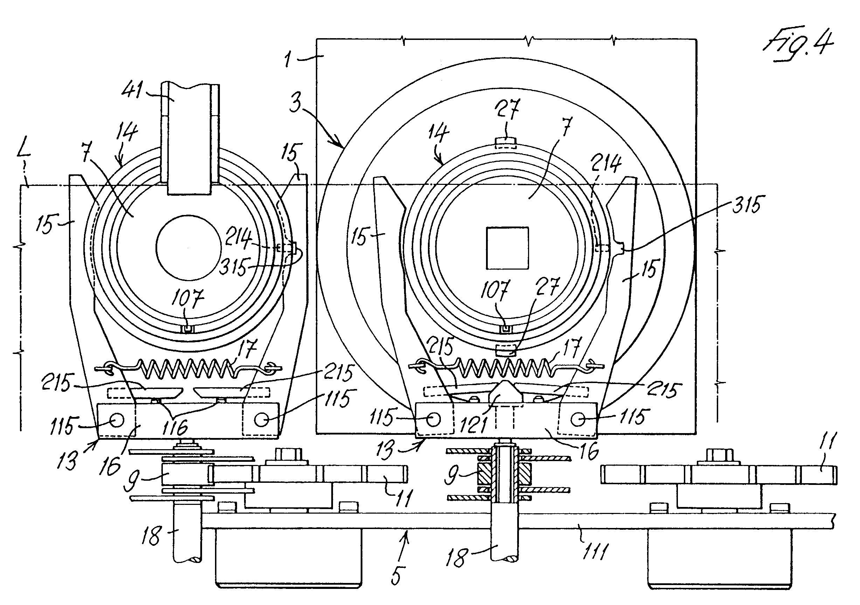

Whenever the desired cartridge 14/die 7 or punch 8 assembly is brought into working position, i.e., to axially coincide with the relative die or punch holding unit 3 or 4, the head 121 is driven against, and is engaged between the levers 215 of the involved pair of gripper members 15 (see Figure 4), so that this head 121 will cause these gripper members 15 to be opened, and the desired cartridge 14/die 7 or punch 8 assembly to be thus released. The said cartridge 14/die 7 or punch 8 assembly is simultaneously engaged by trueing and locking means provided in the die or punch holding unit 3 or 4. The involved gripper members 15 are being kept in their opened condition for the whole operative time of the relative tool, waiting for the tool operation to be at an end, whereupon as a result of the head 121 being retracted, these gripper members 15 are returned into their closed position by the spring 17 acting thereon, so that they will seize again the associated cartridge 14/die 7 or punch 8 assembly, and as soon as this cartridge/die or punch assembly has been disconnected from its die or punch holding unit 3, 4, this assembly can be translated, and a tool change can be effected.

Referring particularly to Figure 3, the means for trueing the cartridge 14 for a die 7 with its die holding unit 3, comprise a sleeve 22 which is slidably fitted into the void space within the vertical tubular body 103 constituting the die holding unit 3. The upper end of this sleeve 22 is formed with a peripheral short tapering face 122 and, in a substantially median zone, is formed with a peripheral annular flange 222 received in an annular chamber 113 provided between the said body 103 and the said sleeve 22, and which at one side end thereof is connected with two ducts 123 and 133 for alternatively supplying fluid under pressure thereinto. The chamber 113 and the flange 222 fitted with suitable seals 322, form a cylinder-and-piston actuator unit which is for moving on command the sleeve 22 from an inactive position in which this sleeve is entirely housed in the void space within the body 103, to an active position in which the top end of said body 103 comes to be engaged in the bottom opening in an overlying cartridge 14 for a die 7, and vice-versa. On the sleeve 22 being partly engaged in a cartridge 14 for a die 7, the conical face 122 at the upper end of said sleeve causes this cartridge to be trued.

It is also provided for the sleeve 22 to be rotatable around the axis Y by a geared motor 23 driving the same through a pair of gears 24 and 25. The gear 24 is keyed onto the driving shaft 230 of the said geared motor 23, and the gear 25 is connected to the lower end of the sleeve 22 through respective toothings 422 and 125, whereby the said sleeve is also allowed to slide axially. The rotation of sleeve 22 is transmitted to an overlying cartridge 14 for a die 7 through a pin 26 which is axially fitted in the upper rim of said sleeve, and as the said two bodies 22, 14 are being interlocked, the said pin 26 comes to be engaged in a matching recess 314 formed in an internal annular flange 414 in cartridge 14. It is thus possible to move a die 7 into the desired angular position, since it is non-rotatably fitted in its cartridge, thanks to a radial pin 107 preventing the same from turning round (see Figure 4).

The means for locking the cartridge 14 for a die 7 to the die holding unit 3, comprise two clamps 27 located in diametrically opposite positions, close to a cartridge-supporting annular flange 514, such that they are at the same time in line with each other on a longitudinal axis of the machine main frame. These clamps 27 can be vertically moved up and down through a short distance, whereby they are caused to lock the flange 514 against, or to release the same from, the upper rim of body 103. More particularly, the said clamps 27 are carried by a respective, suitably guided vertical spindle 28 which is threaded in a ring nut 29 slidably fitted on the body 103 of the die holding unit. The said ring nut 29 is provided with an inward annular projection 129 received in a chamber 143 formed between the cylindrical body 103 and the said ring nut, and which is set in communication with two ducts 153 and 163 for a pressure fluid to be alternatively supplied into the said chamber 143. Also in this case, the said chamber 143 and ring nut 29 form, thanks to the provision of suitable seals 173 being caused to cooperate therewith, a cylinder-and-piston unit for driving up and down the said clamps 27.

Owing to constructional reasons, the tubular body 103 of the die holding unit 3 is manufactured in two parts which are made integral with each other by means of radial screws 183. The tightness between these two parts of the tubular body 103 is ensured by a seal 193.

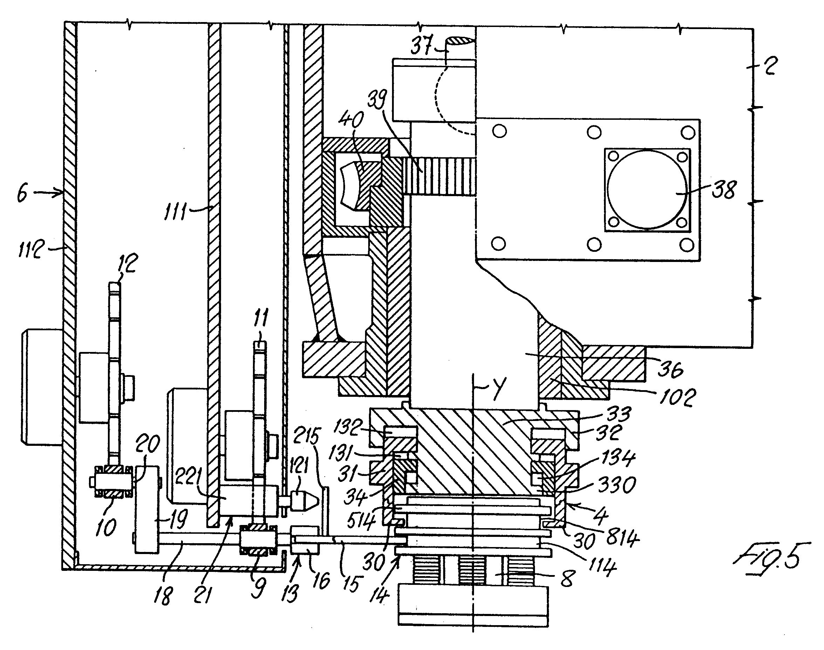

Referring to Figures 5 to 7, there is shown that the means for locking and trueing a cartridge 14 for a punch 8 with the punch holding unit 4 comprise a pair of brackets 30 which are arranged, and perform their function just like the clamps 27 for the die holding unit 3. The said brackets 30 are attached to a hollow piston 31 received in the chamber 132 of a cylinder 32 which is integral with the body 33 of the punch holding unit 4. Provided in the chamber 131 of piston 31 is a second hollow piston 34 with its chamber 134 being closed by a peripheral annular flange 330 formed at the lower end of said body 33. The hollow piston 34 has an axial stud 234 fitted in its lower rim. The chambers 131 and 132 are respectively set in communication with the ducts 231 and 232 for feeding the same on command with fluid under pressure, while the chamber 134 is supplied through the same chamber 132, to which the said chamber 134 is connected through duct 334. Of course, the members 31, 34 forming the said actuator unit are fluid-tight engaged with each other by means of suitable seals 35.

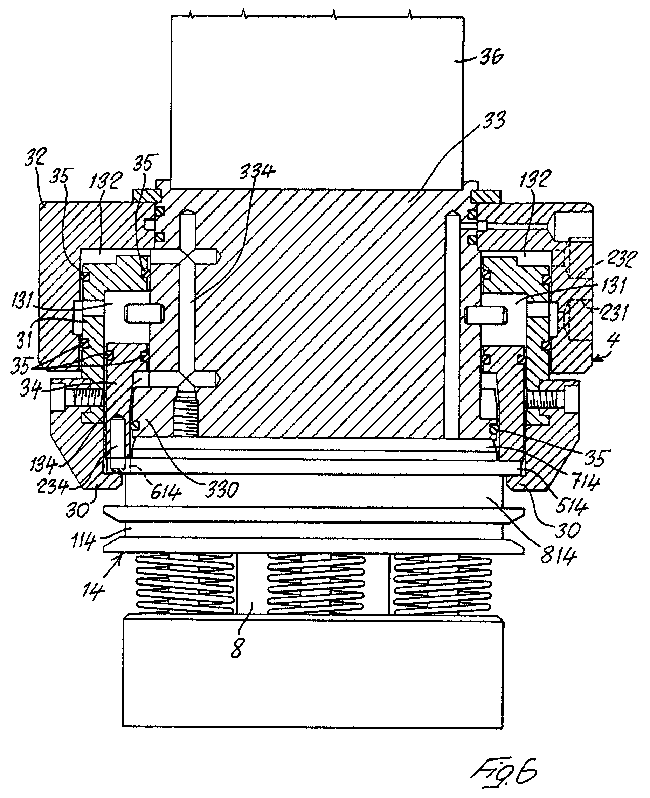

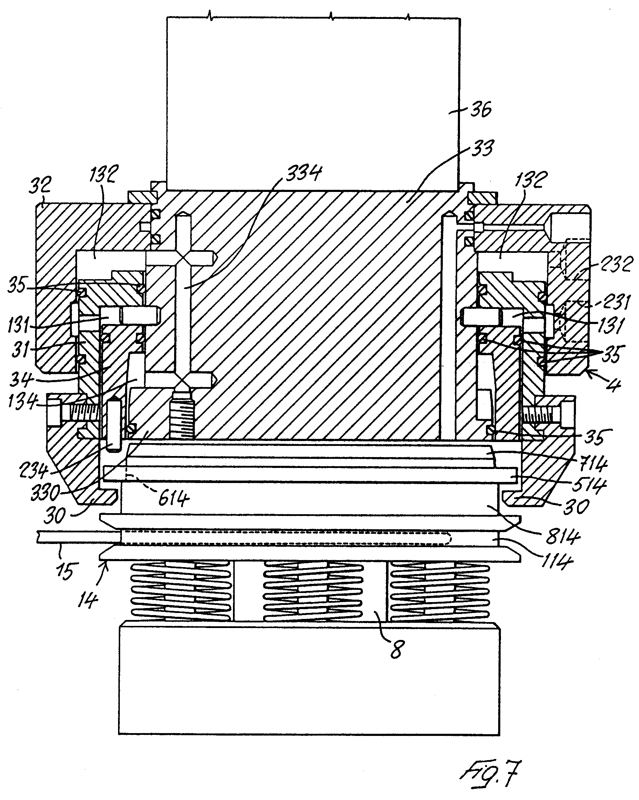

When the said punch cartridge locking and trueing means are set in their opened position (see Figure 7), with the brackets 30 being suitably spaced apart from piston 34, the cartridge 14 of the selected punch 8 is so moved into working position that its flange 514 will be caused to lie between the said brackets 30 and the said piston 27. Thereupon, owing to fluid under pressure being supplied to the duct 231, the brackets 30 and the piston 34 are drawn near to each other, so that the said cartridge flange 514 will be clamped therebetween (see Figure 6). In this last operative step, the stud 234 in piston 34 becomes engaged in a matching recess 614 formed in the cartridge flange 514, whereby any relative rotation between the punch holding unit 4 and the selected punch cartridge 14 is thus prevented, and the frustoconical end portion 714 of the punch cartridge 14 promotes the self-centering of this punch cartridge 14. In order to have the selected operative punch 8 changed, fluid under pressure is supplied to duct 232, which results in the said punch cartridge locking means being opened.

In order to be allowed to change the angular position of the punch 8 that is coupled with the punch holding unit 4, the body 33 of the punch holding unit 4 is attached to one end of a shaft 36 which is axially and rotatably housed in a guide sleeve 102 being integral with the frame 2 of the punching and nibbling machine. This shaft 36 is imparted its normal reciprocating motion by a driving rod 37, and the said shaft is driven in rotation, whenever it is required, by an actuator 38 to which the same is connected through a suitable pair of gears 39 and 40, which of course allow the said shaft 36 to be axially reciprocated.

As it can be clearly seen in Figure 1, the tools in the magazines 5 and 6 according to the invention, which are contiguous to the respective tool set in working position in the die or punch holding unit 3, 4, are situated according to whether they are dies 7 or punches 8, at a somewhat lower or higher level than the respective operative tool, so that the movement of the grippers 41 holding a worksheet L is by no means hampered. Moreover, since the die cartridges 14 are prevented from being upturned, no means for clamping the dies 7 to their cartridges 14 is provided, so that an appreciably simplified construction of these members 7, 14 is then attained.

In Figure 4 there is also shown that thanks to the typical construction of the die cartridges 14, the sheet-holding grippers 41 may be even moved above the die cartridges lying near to the operative die 7, so that also the edges of a sheet L can be machined.

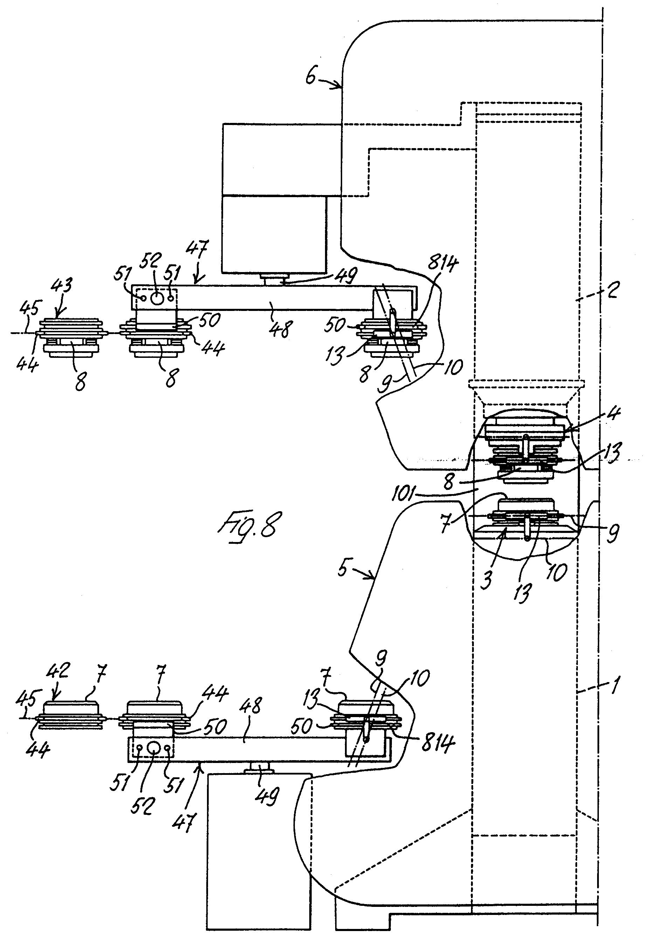

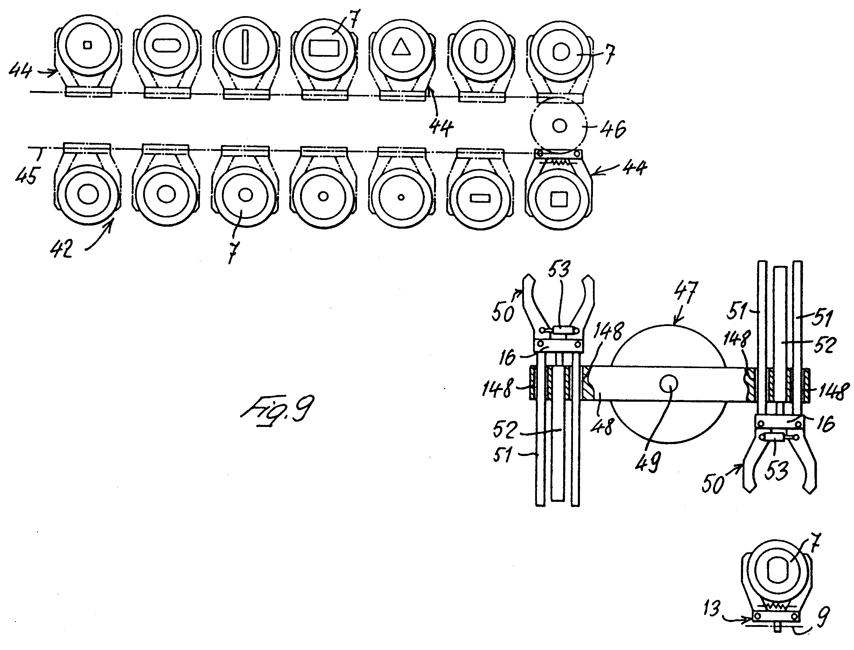

Referring to Figures 8 and 9, there is shown that a pair of additional magazines 42 and 43, of which the magazine 42 carries a set of dies 7, and the magazine 43 a matching set of punches 8, are associated with a punching and nibbling machine as disclosed above. In the said magazines 42, 43, the tools 7, 8 are each held by a respective gripper 44 that is just like the grippers 13 for the tools carried by the magazines 5 and 6, located inside the punching and nibbling machine. The said grippers 44 are fitted in a suitably spaced apart relation on an endless chain conveyor 45 lead over a pair of wheels 46, of which one is a motor-driven wheel. By a transferring device 47, a tool 7, 8 is transferred from one of the two additional die or punch magazines 42, 43 to the respective tool magazine 5, 6 located inside the said machine, and vice-versa. The said transferring device 47 comprises a horizontal arm 48 centrally borne by an upstanding rotatable shaft 49. Carried on this arm 48 are two grippers 50 that are just of a like construction as the disclosed grippers 13, 44, and the said grippers 50 extend outwardly from opposite sides of arm 48, and are translatable transversely to the said arm. More particularly, both members of each gripper 50 are fixed to the one end of a pair of spindles 51 slidably received in respective through bores 148 formed in the ends of arm 48. The motion of translation of grippers 50 is imparted by a respective, hydraulically or pneumatically operated linear actuator 52, and the said grippers 50 are each opened and closed by a piston 53.

By the provision of the transferring device 47, the tools 7, 8 are transferred from one of the external tool magazines 42, 43 to one of the tool magazines 5, 6 located inside the punching and nibbling machine, and vice-versa, according to the following operative sequence:

From their rest position shown in Figure 9, both grippers 50 are at first driven outwardly, away from the arm 48, and are each caused to become engaged in the peripheral annular groove 814 in the respective die or punch cartridge 14, whereupon the grippers 50 are driven inwardly, and are returned into their starting position, whereby the said grippers 50 will each withdraw the respective tool 7 or 8. Nextly, the arm 48 is rotated by one-half of a turn, and the to-and-fro movement of the grippers 50 is repeated, so that the withdrawn tools 7, 8 are now handed over by the said grippers 50 to the grippers 13, 44 in the tool magazines 5, 6; 42, 43 and a tool change will be thus effected.

From the foregoing there clearly appears that a punching and nibbling machine according to the invention affords, when compared with known machines of the same type, a number of advantages, among which:
- an extremely quick tool change,
- the possibility for the tool magazines 5, 6 located inside the machine, to be arranged along a vertical plane, whereby the operative field of the punching and nibbling machine is not encumbered,
- a remarkably simple construction of all the tool magazines,
- the possibility of appreciably increasing the number of immediately available tools, thanks to the provision of the additional tool magazines 42 43,
- a very high sheet working precision, which is due to the fact that the plays between the tools 7, 8, their cartridges 14, and the tool holding units 3, 4, are considerably reduced,
the tool magazines 5, 6 located inside the machine are by no means an impediment to an easy displacement of the sheets.

## Claims

1. A punching and nibbling machine provided with a device for automatically changing a pair of tools, of which one is a stationary die (7) and the other is a movable punch (8), which when set in working position are both coupled with the respective die or punch holding unit (3, 4) on the common, vertical operative axis (Y) of the punching and nibbling machine, a magazine being fitted with conveyor means for carrying the tools (7, 8) and bringing the selected pair of tools into working position, in which their axis (X) is caused to coincide with the machine operative axis (Y), the said conveyor means being so designed that the tools are moved along a closed path, with their axes (X) being substantially held in a plane passing through the said operative axis (Y) of the punching and nibbling machine, characterized in that
a) two main magazines (5, 6) are provided, one (5) for the dies (7) and one (6) for the punches (8),
b) each magazine (5, 6) is provided with an associated conveyor means carrying only the dies (7), respectively only the punches (8).
c) the path of each conveyor means has a path section along which the corresponding tools (dies and punches) pass through a position in which a punch and a die are arranged in a vertically overlying relation, and their axes are aligned with the operative axis of the machine.

2. The punching and nibbling machine according to claim 1, wherein the two main magazines (5, 6) comprise a pair of respective chains (9,10) or any like means, which carry a plurality of equispaced grippers (13) holding each a die or punch cartridge (14), the said chains (9, 10) that are arranged in a slightly offset relation, being caused to circulate in parallel planes, whereby the tools (7, 8) are conveyed with a fixed direction of their axes (X) being maintained, so that these tools are prevented from being upturned, and the provision of any tool and cartridge (14) clamping means is thus unnecessary.

3. The punching and nibbling machine according to Claim 2, wherein near to the sheet (L) being worked, the said conveyor chains (9, 10) are lead along such a path that the tools being contiguous to the operative tool are set, relative to the respective operative tool, at a different level which generally is a somewhat lower or higher level, according to whether the contiguous tools are dies (7) or punches (8), this in order to not hinder the movement of the grippers (41) holding the sheet (L).

4. The punching and nibbling machine according to the preceding Claims, wherein either of the two main tool magazines (5, 6) comprise a respective actuator device (21) which is located near the relative die or punch holding unit (3, 4), and is for causing the grippers (13) to be each opened and closed, once the tool (7 or 8) held by one of the said grippers (13) has been brought into working position.

5. The punching and nibbling machine according to Claims 1 to 4, wherein the grippers (13) are each formed by a pair of opposite, flat gripper members (15) which are fulcrumed about the ends of a gripper supporting crosspiece (16), and are interconnected by a spring (17) tending to swing the gripper members (15) of grippers (13) toward each other, the gripper members (15) having to be engaged in a peripheral annular groove (114) in the respective die or punch cartridge (14), so that they will hold this tool by clamping it therebetween, owing to the bias of spring (17).

6. The punching and nibbling machine according to Claim 5, wherein an inwardly extending lever (215) is respectively provided for either of the two gripper members (15) of each gripper (13), the said levers (215) being caused to abut, owing to the bias of spring (17), against the gripper supporting crosspiece (16), whereby the gripper members will be held in the properly opened out condition.

7. The punching and nibbling machine according to Claims 4 to 6, wherein the said actuator device (21) comprises a frustoconical head (121) which is secured to the stem of a pneumatically or hydraulically operated cylinder (221), and the said head (21) is to be engaged between the levers (215) for a pair of gripping members (15) of a gripper (13), so that the head (21) will cause this gripper (13) to be opened.

8. The punching and nibbling machine according to Claims 1 to 7, wherein the crosspiece (16) for supporting each gripper (13) is attached to the one end of a rod (18) carried by one of the two conveyor chains (9, 10), while the other rod end is connected through an intermediate link (19) to a pivot (20) fitted on the other chain.

9. The punching and nibbling machine according to Claim 5, wherein at least one of the gripper members (15) of each gripper (13) has a small notch (315) formed in the inward side edge thereof, for a matching radial pin (214) secured to the outside of the die or punch cartridge (14) held by a gripper (13), to be engaged in the said notch (315), whereby the cartridge is prevented from turning round in the respective gripper (13).

10. The punching and nibbling machine according to the preceding Claims, wherein means are provided for trueing and locking the pair of tools (7, 8) set in working position, with the respective die or punch holding unit (3, 4).

11. The punching and nibbling machine according to Claim 10, wherein the means for trueing the cartridge (14) of a die (7) set in working position, comprise a sleeve (22) which is slidably fitted into the void space within the tubular body (103) constituting the die holding unit (3), and is movable from an inactive position in which the sleeve (22) is entirely housed in the said tubular body (103), to an active position in which the sleeve (22) is caused to protrude therefrom by its tapering end section (122), so that the said sleeve (22) will be engaged in, and will true the said die cartridge (14), or vice-versa.

12. The punching and nibbling machine according to Claim 11, wherein the means for causing the sleeve (20) to slide up and down comprise a piston consisting of a peripheral annular flange (222) formed in the said sleeve (20), and received in a respective chamber (113) formed in the tubular body (103) of the die holding unit (3), and being suitably supplied with fluid under pressure.

13. The punching and nibbling machine according to Claims 11 and 12, wherein the sleeve (20) is connected to an actuator (23) that on command causes the sleeve (20) to be rotated around its axis (Y), whereby the angular position of the operative die (7) can be changed, means being provided for preventing any relative rotation between the sleeve (20) and the die cartridge (14).

14. The punching and nibbling machine according to Claim 13, wherein the means for locking the sleeve (20) to a die cartridge (14) so as to prevent any relative rotation therebetween, comprise an axial pin (26) which is fitted into the rim of the sleeve tapering end section (122), and is to be engaged in a matching recess (314) formed in the die cartridge (14), as the sleeve (20) is being associated therewith.

15. The punching and nibbling machine according to Claim 13, wherein through a pair of gears (24, 25) the sleeve (20) is connected to the sleeve-driving actuator (23), one (24) of the said gears being keyed onto the rotary shaft (230) of said actuator (23), and the other (25) being slidably, but non-rotatably fitted on the said sleeve (20) by means of respective, suitable toothings (422, 125).

16. The punching and nibbling machine according to Claim 10, wherein the means for locking the cartridge (14) of a die (7) having been set in working position, comprise two clamps (27) located in diametrically opposite positions on the die holding unit (3), close to a cartridge-bearing annular flange (514), and which are in line with each other on the longitudinal axis of the machine, the said clamps (27) being vertically movable up and down through a short distance, whereby the said flange (514) can be locked against, and can be released from, the rim of the tubular body (103) of the die holding unit (3).

17. The punching and nibbling machine according to Claim 16, wherein the means for moving up and down the said clamps (27) comprise a hydraulically or pneumatically operated cylinder-and-piston actuator unit (143, 129) which is connected thereto through respective splindles (28), the chamber (143) in the cylinder of the said actuator unit being formed in the skirt of the tubular body (103) of the die holding unit (3), and the relative piston being formed by an inward annular projection (129) of a ring nut (29) fitted on the said tubular body (103).

18. The punching and nibbling machine according to Claim 10, wherein the means for locking the cartridge (14) of a punch (8) having been set in working position, comprise a pair of brackets (30) arranged on the punch holding unit (4) in diametrically opposite positions, close to an annular flange (330) for the punch cartridge (4) to bear thereon, and which are in line with each other on the longitudinal axis of the machine, the said brackets (30) being vertically movable up and down through a short distance, whereby the said flange (330) will be locked against, and will be released from, the cylindrical body (33) constituting the real and proper punch holder.

19. The punching and nibbling machine according to Claims 10 and 18, wherein the means for trueing the cartridge (14) of the punch (8) having been set in working position, comprise a hollow piston (34) coaxially fitted on the cylindrical body (33) of the punch holding unit (4), and being imparted such a reciprocating motion, that the punch holding unit (4) will be either engaged on a short frustoconical end portion (714) of, and will be thus trued with, the punch cartridge (14), or it will be disengaged therefrom.

20. The punching and nibbling machine according to Claims 18 and 19, wherein the means for moving the brackets (30) and the sleeve (102) comprise two coaxial hollow pistons (31, 34) fitted into each other, with the internal piston (34) being made integral with the sleeve (102), and the external piston (31) that carries the brackets (30), being received in the chamber (132) of a cylinder (32) which is co-axially fixed to the body (33) of the punch holding unit (4), the chamber (134) in the internal hollow piston (34) being closed by a respective peripheral annular flange (330) formed in the said body (33), and being set in communication with the chamber (132) in the cylinder (32), so that by feeding fluid under pressure into the chamber (131) in the external piston (31), the brackets (30) and the sleeve (102) are drawn near to each other, and the said brackets (30) will thus lock and true the punch cartridge (14), while by feeding fluid under pressure into the chamber (132) in the cylinder (132), and so into the chamber (134) in the internal piston (34), the brackets (30) and the sleeve (20) are drawn away from each other, and the punch cartridge (14) will be thus released.

21. The punching and nibbling machine according to Claims 18 to 20, wherein the punch holding unit (14) is fitted to one end of a shaft (36) that apart from being imparted a reciprocating motion, is so drivable in rotation as to allow the angular position of the operative punch (8) to be changed, means being provided for preventing any relative rotation between the punch cartridge (14) and the punch holding unit (4).

22. The punching and nibbling machine according to Claims 19 to 21, wherein the means for locking a punch cartridge (14) to the punch holding unit (4) so as to prevent any relative rotation therebetween, comprise an axial stud (234) fitted into the hollow piston (34), and which is to be engaged in a matching recess (614) formed in the cartridge flange (514), any time these members (14, 4) will be connected with each other.

23. The punching and nibbling machine according to Claim 21, wherein the said shaft (36) is connected through a pair of gears (39, 40) to an actuator (38) for driving the said shaft (36) in rotation, with the one gear (39) being keyed onto the rotary shaft (36) of the said actuator (38), and the other gear (40) being directly connected with the said atuator (38), the said gears (39, 40) being in meshing engagement with each other through suitable means allowing the shaft (36) to be axially moved up and down.

24. The punching and nibbling machine according to any one or more of the preceding Claims, characterized in that the same comprises a pair of additional magazines (42, 43), of which one (42) carries a set of dies (7) and the other (43) a matching set of punches (8), means being provided for automatically transferring the tools (7, 8) from these additional magazines (42, 43) to the main magazines (5, 6) in the punching and nibbling machine, and vice-versa.

25. The punching and nibbling machine according to Claim 24, wherein each additional magazine (42, 43) comprises an endless chain conveyor (45) fitted with a plurality of grippers (44) for holding the tools (7, 8).

26. The punching and nibbling machine according to Claims 24 and 25, wherein the means (47) for transferring the tools (7, 8) from one of the two additional magazines (42, 43) to the respective main magazine (5, 6), and vice-versa, comprise a horizontal arm (48) centrally borne by an upstanding rotatable shaft (49), and carrying in its end sections two grippers (50) which extend outwardly from opposite sides of the said arm (48), and are translatable transversely thereto, the whole arrangement being such that the desired tools (7, 8) will be each withdrawn simultaneously from either of the two die magazines (42, 5) and punch magazines (43, 6) that have been operatively associated with each other, whereupon the said arm (48) will be rotated by one-half of a turn, and the withdrawn tools (7, 8) will be then transferred into the respective die or punch magazines (5, 42; 6, 43), so that a change of the tools (7, 8) will be thus effected.

27. The punching and nibbling machine according to Claim 26, wherein either of the two grippers (50) is secured to one end of a pair of spindles (51) which are slidably received in respective through bores (148) formed in the ends of the gripper carrying arm (48), the motion of translation of said grippers (50) being imparted by an associated, hydraulically or pneumatically operated linear actuator (52).

28. The punching and nibbling machine according to Claims 26 and 27, wherein each gripper (50) consists of two opposed gripping members which are swingably fitted on a supporting crosspiece (16), and are interconnected by a hydraulically or pneumatically operated piston (53) for controlling their opening and closing movement, the said grippers (50) having to be engaged in a second peripheral annular groove (814) formed in each die or punch cartridge (14).

29. The punching and nibbling machine according to Claim 25, wherein the grippers (44) for holding the tools (7, 8) in the additional magazines (42, 43) are just of a like construction as the grippers (13) provided in the main magazines (5, 6).

## Patentansprüche

1. Eine Stanz- und Nibbel-Maschine, die mit einer Vorrichtung zum automatischen Wechsel eines Paares von Werkzeugen versehen ist, von denen eines eine stationäre Schnittplatte (7) und das andere ein beweglicher Schnittstempel (8) ist, welche, wenn sie in die Arbeitsposition gebracht werden, beide mit der jeweiligen Schnittplatten- oder Schnittstempel-Halterungseinrichtung (3, 4) auf der gemeinsamen vertikalen Arbeitsachse (Y) der Stanz- und Nibbel-Maschine gekoppelt sind, wobei ein Magazin mit einer Fördereinrichtung versehen ist, um die Werkzeuge (7, 8) zu tragen und das ausgewählte Werkzeugpaar in die Arbeitsposition zu bringen, in der ihre Achse (X) mit der Arbeitsachse (Y) der Maschine zusammenfällt, wobei die Fördereinrichtung so konzipiert ist, daß die Werkzeuge entlang einer geschlossenen Bahn bewegt werden, wobei ihre Achsen (X) im wesentlichen in einer Ebene gehalten werden, die durch diese Arbeitsachse (Y) der Stanz- und Nibbel-Maschine geht, dadurch gekennzeichnet, daß
a) zwei Hauptmagazine (5, 6) vorgesehen sind, und zwar eines (5) für die Schnittplatten (7) und eines (6) für die Schnittstempel (8),
b) jedes Magazin (5, 6) mit einer zugeordneten Fördereinrichtung ausgerüstet ist, die jeweils nur die Schnittplatten (7) bzw. jeweils nur die Schnittstempel (8) tragen, und daß
c) die Bewegungsbahn jeder Fördereinrichtung einen Bahnabschnitt hat, entlang welchem die entsprechenden Werkzeuge (Schnittplatten und Schnittstempel) eine Position passieren, in welcher ein Schnittstempel und eine Schnittplatte in einer vertikal übereinanderliegenden Relativstellung liegen und ihre Achsen mit der Arbeitsachse der Maschine ausgerichtet sind.

2. Die Stanz- und Nibbel-Maschine nach Anspruch 1, bei der die beiden Hauptmagazine (5, 6) ein Paar von jeweiligen Ketten (9, 10) oder ähnliche Einrichtungen umfassen, die eine Vielzahl von in gleichen Abständen befindlichen Greifern (13) tragen, von denen jeder einen Schnittplatten- oder Schnittstempelhalter (14) trägt, wobei diese Ketten (9, 10), die in einer leicht versetzten Relativstellung angeordnet sind, dazu gebracht werden, in parallelen Ebenen umzulaufen, wodurch die Werkzeuge (7, 8) so gefördert werden, daß eine feststehende Richtung ihrer Achsen (X) aufrechterhalten bleibt, so daß diese Werkzeuge daran gehindert sind zu kippen und damit das Vorsehen von jedweden Werkzeug- und Halter (14)-Klemmelementen überflüssig ist.

3. Die Stanz- und Nibbel-Maschine nach Anspruch 2, bei der in der Nähe des zu bearbeitenden Bleches (L) diese Förderketten (9, 10) entlang einer solchen Bahn geführt sind, daß die Werkzeuge, die dem im Einsatz befindlichen Werkzeug benachbart sind, relativ zu dem jeweiligen im Einsatz befindlichen Werkzeug auf einem unterschiedlichen Höhenniveau liegen, welches im wesentlichen ein etwas niedrigeres oder etwas höheres Niveau in Abhängigkeit davon ist, ob die benachbarten Werkzeuge Schnittplatten (7) oder Schnittstempel (8) sind, um dadurch nicht die Bewegung der das Blech (L) haltenden Greifer (41) zu behindern.

4. Die Stanz- und Nibbel-Maschine nach den vorhergehenden Ansprüchen, bei denen jedes der beiden Haupt-Werkzeugmagazine (5, 6) eine jeweilige Antriebseinrichtung (21) aufweist, die in der Nähe der zugeordneten Schnittplatten- oder Schnittstempel-Halterungseinrichiung (3, 4) liegt und dazu dient, die Greifer (13) jeweils zu öffnen und zu schließen, sobald das Werkzeug (7 oder 8), das von einem dieser Greifer (13) gehalten wird, in die Arbeitsposition gebracht worden ist.

5. Die Stanz- und Nibbel-Maschine nach den Ansprüchen 1 bis 4, bei der die Greifer (13) jeweils von einem Paar von sich gegenüberliegenden, flachen Greiferelementen (15) gebildet sind, die im Bereich der Enden eines Greifer-Querträgers (16) gelenkig gelagert und durch eine Feder (17) aneinander angeschlossen sind, die dazu neigt, die Greiferelemente (15) des Greifers (13) aufeinander zu zu verschwenken, wobei die Greiferelemente (15) in eine periphere Ringnut (114) in dem jeweiligen Schnittplatten- oder Schnittstempelhalter (14) einzugreifen vermögen, so daß sie dieses Werkzeug aufgrund der Vorspannung der Feder (17) durch Festklemmen festhalten.

6. Die Stanz- und Nibbel-Maschine nach Anspruch 5, bei der ein nach innen gerichteter Hebel (215) jeweils für jedes der beiden Greiferelemente (15) jedes Greifers (13) vorgesehen ist, wobei diese Hebel (215) aufgrund der Vorspannung der Feder (17) gegen den Greiferquerträger (16) zur Anlage bringbar sind, wodurch die Greiferelemente in der richtigen, nach außen geöffneten Stellung gehalten werden.

7. Die Stanz- und Nibbel-Maschine nach den Ansprüchen 4 bis 6, bei der diese Antriebseinrichtung (21) einen kegelstumpfförmigen Kopf (121) aufweist, der an einer Stange eines pneumatisch oder hydraulisch betätigten Zylinders (221) befestigt ist, und welcher Kopf (21) zwischen die Hebel (215) eines Paares von Greifelementen (15) eines Greifers (13) einzudringen vermag, so daß der Kopf (21) bewirkt, daß dieser Greifer (13) geöffnet wird.

8. Die Stanz- und Nibbel-Maschine nach den Ansprüchen 1 bis 7, bei der der Querträger (16) zur Halterung jedes Greifers (13) an dem einen Ende einer Stange (18) befestigt ist, die von einer der beiden Förderketten (9, 10) getragen ist, während das andere Stangenende über ein Zwischenglied (19) an einen an der anderen Kette befestigten Drehzapfen (20) angeschlossen ist.

9. Die Stanz- und Nibbel-Maschine nach Anspruch 5, bei der mindestens eines der Greiferelemente (15) jedes Greifers (13) an ihrem inneren Seitenrand eine kleine Aussparung (315) für einen zugeordneten Radialstift (214) aufweist, der an der Außenseite des von einem Greifer (13) gehaltenen Schnittplatten- oder Schnittstempelhalter (14) befestigt ist und in diese Aussparung (315) einzuführen ist, wodurch der Halter an einer Drehung entlang des jeweiligen Greifers (13) gehindert ist.

10. Die Stanz- und Nibbel-Maschine nach den vorhergehenden Ansprüchen, bei der Einrichtungen zum Zentrieren und Verriegeln des in die Arbeitsposition gebrachten Paares von Werkzeugen (7, 8) relativ zu der jeweiligen Schnittplatten- oder Schnittstempel-Halterungseinheit (3, 4) vorgesehen sind.

11. Die Stanz- und Nibbel-Maschine nach Anspruch 10, bei der die Einrichtung zum Zentrieren des Halters (14) einer in die Arbeitsposition gebrachten Schnittplatte (7) eine Hülse (22) umfaßt, die verschiebbar in den Leerraum innerhalb des die Schnittplatten-Halterungseinheit (3) bildenden Rohrkörpers (103) eingesetzt und aus einer inaktiven Position, in der die Hülse (22) vollständig in diesem Rohrkörper (103) untergebracht ist, in eine aktive Position beweglich ist, in der die Hülse (22) daraus mit ihrem abgeschrägten Endabschnitt (122) herausragt, derart, daß die Hülse (22) in diesen Schnittplattenhalter (14) eingeführt ist und damit diesen Schnittplattenhalter (14) zentriert oder umgekehrt.

12. Die Stanz- und Nibbel-Maschine nach Anspruch 11, bei der die Einrichtung, welche das Auf- und Abwärtsverschieben der Hülse (20) bewirkt, einen Kolben umfaßt, der aus einem in dieser Hülse (20) gebildeten peripheren Ringflansch (222) besteht und in einer zugeordneten, in dem Rohrkörper (103) der Schnittplatten-Halterungseinheit (3) gebildeten Kammer (113) aufgenommen ist und in geeigneter Weise mit einem Druckmittel beaufschlagbar ist.

13. Die Stanz- und Nibbel-Maschine nach den Ansprüchen 11 und 12, bei der die Hülse (20) an einen Antrieb (23) angeschlossen ist, der auf Befehl die Rotation dieser Hülse (20) um ihre Achse (Y) bewirkt, wodurch die Winkelstellung der sich im Einsatz befindlichen Schnittplatte (7) verändert werden kann, wobei Mittel vorgesehen sind, um jedwede Relativdrehung zwischen der Hülse (20) und dem Schnittplattenhalter (14) zu verhindern.

14. Die Stanz- und Nibbel-Maschine nach Anspruch 13, bei der die Einrichtung zum Verriegeln der Hülse (20) mit einem Schnittplattenhalter (14), um jede Relativdrehung desselben zu verhindern, einen Axialstift (26) enthält, der in den Rand des abgeschrägten Hülsenendabschnittes (122) eingesetzt ist und in eine dazu passende, in dem Schnittplattenhalter (14) gebildete Aussparung (314) einzudringen vermag, wenn die Hülse (20) damit zusammengeführt wird.

15. Die Stanz- und Nibbel-Maschine nach Anspruch 13, bei der die Hülse (20) mittels eines Paares von Zahnrädern (24, 25) an den Hülsenantrieb (23) angeschlossen ist, wobei eines (24) dieser Zahnräder auf eine Drehwelle (230) dieses Antriebes (23) und das andere Zahnrad (25) verschiebbar aber nicht drehbar an dieser Hülse mittels zugeordneter geeigneter Verzahnungen (422, 125) angebracht ist.

16. Die Stanz- und Nibbel-Maschine nach Anspruch 10, bei der die Einrichtung zum Verriegeln des Halters einer in die Arbeitsposition gebrachten Schnittplatte (7) zwei Klemmbacken (27) aufweist, die in diametral gegenüberliegenden Positionen an der Schnittplatten-Halterungseinheit (3) benachbart zu einem Halter tragenden Ringflansch (514) angeordnet sind, und welche Klemmbacken in Linie miteinander auf der Längsachse der Maschine liegen, wobei diese Klemmbacken (27) über einen kurzen Weg vertikal auf- und abbewegbar sind, wodurch dieser Flansch (514) relativ zu dem Rand des Rohrkörpers (103) der Schnittplatten-Halterungseinheit (3) verriegelt oder davon freigegeben werden kann.

17. Die Stanz- und Nibbel-Maschine nach Anspruch 16, bei der die Einrichtung zum Auf- und Abbewegen dieser Klemmbacken (27) eine hydraulisch oder pneumatisch betätigte Zylinder-Kolben-Antriebseinheit (143, 129) umfaßt, die daran mittels jeweiliger Spindeln (28) angeschlossen ist, wobei die Kammer (143) in dem Zylinder dieser Antriebseinheit im Bereich des Rohrkörpers (103) der Schnittplatten-Halterungseinheit (3) angeordnet ist, während der zugeordnete Kolben durch einen nach innen gerichteten Ringflansch (129) einer Ringmutter (29) gebildet ist, die auf diesen Rohrkörper (103) aufgesetzt ist.

18. Die Stanz- und Nibbel-Maschine nach Anspruch 10, bei der die Einrichtung zum Verriegeln des Halters (14) eines in die Arbeitsposition gebrachten Schnittstempels (8) ein Paar von Trägern (30) umfaßt, die an der Schnittstempel-Halterungseinheit (4) in diametral gegenüberliegenden Positionen benachbart zu einem Ringflansch (330) für den dagegen zur Anlage bringbaren Schnittstempelhalter (4) angeordnet sind, und die auf der Längsachse der Maschine in Linie zueinanderliegen, wobei diese Träger (30) über einen kurzen Weg auf- und abbewegbar sind, wodurch dieser Flansch (330) mit dem den tatsächlichen und eigentlichen Schnittstempelhalter verriegelt bzw. davon freigegeben wird.

19. Die Stanz- und Nibbel-Maschine nach den Ansprüchen 10 und 18, bei der die Einrichtung zum Zentrieren des Halters (14) des in die Arbeitsposition gebrachten Schnittstempels (8) einen Hohlkolben (34) umfaßt, der koaxial an dem Zylinderkörper (33) der Schnittstempel-Halterungseinheit (4) angebracht ist und dem eine derartige hin- und hergehende Bewegung erteilbar ist, daß die Schnittstempel-Halterungseinheit (4) auf einen kurzen, kegelstumpfförmigen Endabschnitt (714) des Schnittstempelhalters (14) aufgeschoben und damit zentriert oder davon freigegeben wird.

20. Die Stanz- und Nibbel-Maschine nach den Ansprüchen 18 und 19, bei der die Einrichtung zum Verstellen der Träger (30) und der Hülse (102) zwei koaxiale ineinander gesetzte Hohlkolben (31, 34) umfaßt, von denen der Innenkolben (34) mit der Hülse (102) zusammengefaßt ist, während der Außenkolben (31), der die Träger (30) trägt, in der Kammer (132) eines Zylinders (32) aufgenommen ist, der koaxial an dem Körper (33) der Schnittstempel-Halterungseinheit (4) befestigt ist, wobei die Kammer (134) in dem inneren Hohlkolben (34) durch einen zugeordneten, in diesem Körper (33) angeordneten peripheren Ringflansch (330) verschlossen ist und mit der Kammer (132) in dem Zylinder (32) in Verbindung steht, so daß durch Zuführen von Druckmittel in die Kammer (131) in dem äußeren Kolben (31) die Träger (30) und die Hülse (102) aufeinander zugezogen werden und damit diese Träger (30) den Schnittstempelhalter (14) verriegeln und zentrieren, während durch Zuführen von Druckmittel in die Kammer (132) in dem Zylinder (32) und damit in die Kammer (134) in dem Innenkolben (34) die Träger (30) und die Hülse (20) voneinander weggezogen werden und der Schnittstempelhalter (14) damit freigegeben wird.

21. Die Stanz- und Nibbel-Maschine nach den Ansprüchen 18 bis 20, bei der die Schnittstempel-Halterungseinheit (14) an dem einen Ende einer Welle (36) angebracht ist, die zusätzlich zu einer hin- und hergehenden Bewegung zu einer Rotationsbewegung antreibbar ist, um die Veränderung der Winkelposition des sich im Einsatz befindlichen Schnittstempels (8) zu ermöglichen, wobei Einrichtungen vorgesehen sind, um jede Relativdrehung zwischen dem Schnittstempelhalter (14) und der Schnittstempel-Halterungseinheit (4) zu verhindern.

22. Die Stanz- und Nibbel-Maschine nach den Ansprüchen 19 bis 21, bei der die Einrichtung zum Verriegeln eines Schnittstempelhalters (14) an der Schnittstempel-Halterungseinheit (4), um jedwede Relativbewegung zwischen denselben zu verhindern, einen in den Hohlkolben (34) eingesetzten Axialbolzen (234) umfaßt, der in eine zugeordnete, in dem Trägerflansch (514) angeordnete Aussparung (614) jedesmal dann einzugreifen vermag, wenn diese Elemente (14, 4) miteinander verbunden werden.

23. Die Stanz- und Nibbel-Maschine nach Anspruch 21, bei der diese Welle (36) mittels eines Paares von Zahnrädern (39, 40) an einen Stellantrieb (38) zum Drehantrieb dieser Welle (36) angeschlossen ist, wobei ein Zahnrad (39) auf die Drehwelle (36) dieses Stellantriebes (38) aufgekeilt ist, während das andere Zahnrad (40) direkt mit diesem Stellantrieb (38) in Verbindung steht, wobei diese Zahnräder (39, 40) mittels geeigneter Elemente im Zahneingriff miteinanderstehen, die eine axiale Auf- und Abwärtsbewegung der Welle (36) ermöglichen.

24. Die Stanz- und Nibbel-Maschine nach irgendeinem oder mehreren der vorhergehenden Ansprüche, dadurch gekennzeichnet, daß sie ein Paar zusätzlicher Magazine (42, 43) enthält, von denen eines (42) einen Satz von Schnittplatten (7) und das andere (43) einen dazu passenden Satz von Schnittstempeln (8) aufnimmt, und daß Einrichtungen vorgesehen sind, um automatisch die Werkzeuge (7, 8) von diesen zusätzlichen Magazinen (42, 43) an die Hauptmagazine (5, 6) in der Stanz- und Nibbel-Maschine zu überführen und umgekehrt.

25. Die Stanz- und Nibbel-Maschine nach Anspruch 24, bei der jedes zusätzliche Magazin (42, 43) einen endlosen Kettenförderer (45) umfaßt, der mit einer Vielzahl von Greifern (44) zur Halterung der Werkzeuge (7, 8) ausgerüstet ist.

26. Die Stanz- und Nibbel-Maschine nach den Ansprüchen 24 und 25, bei der die Einrichtung (47) zum Übertragen der Werkzeuge (7, 8) von einem der beiden zusätzlichen Magazine (42, 43) zu dem jeweiligen Hauptmagazin (5, 6) und umgekehrt einen Horizontalarm (48) umfaßt, der zentral von einer Drehwelle (49) getragen wird und im Bereich seiner Endabschnitte zwei Greifer (50) trägt, die sich nach außen zu entgegengesetzten Seiten dieses Armes (48) erstrecken und dazu in Querrichtung translatorisch bewegbar sind, wobei die Gesamtanordnung derart ist, daß die erforderlichen Werkzeuge (7, 8) jeweils gleichzeitig aus jeden der beiden Schnittplattenmagazine (42, 5) und Schnittstempelmagazine (43, 6) entnommen werden, die operativ einander zugeordnet sind, woraufhin dieser Arm (48) um eine Halbdrehung gedreht wird und die entnommenen Werkzeuge (7, 8) anschließend an die zugeordneten Schnittplatten- oder Schnittstempelmagazine (5, 42; 6, 43) übergeben werden, so daß auf diese Weise ein Wechsel der Werkzeuge (7, 8) durchgeführt wird.

27. Die Stanz- und Nibbel-Maschine nach Anspruch 26, bei der jeder der beiden Greifer (50) an dem einen Ende eines Paars von Spindeln (51) befestigt ist, die verschiebbar in entsprechenden in den Enden des Greifertragarmes (48) angeordneten Durchlaßbohrungen (148) aufgenommen sind, wobei die Translationsbewegung dieser Greifer (50) von einem zugeordneten, hydraulisch oder pneumatisch betätigten Linearantrieb (52) erteilt wird.

28. Die Stanz- und Nibbel-Maschine nach den Ansprüchen 26 und 27, bei der jeder Greifer (50) aus zwei gegenüberliegenden Greifelementen besteht, die verschwenkbar an einem Querträger (16) befestigt und mittels eines hydraulisch oder pneumatisch betätigten Kolbens (53) zur Steuerung ihrer Öffnungs- und Schließbewegung miteinander verbunden sind, wobei diese Greifer (50) in eine zweite periphere Ringnut (814), die in jedem Schnittplatten- oder Schnittstempelhalter (14) angebracht sind, einzugreifen vermögen.

29. Die Stanz- und Nibbel-Maschine nach Anspruch 25, bei der die Greifer (44) zur Halterung der Werkzeuge (7, 8) in den zusätzlichen Magazinen (42, 43) genau von der gleichen Konstruktion sind, wie die in den Hauptmagazinen (5, 6) vorgesehenen Greifern (13).

## Revendications

1. Machine à découper et à grignoter munie d'un dispositif destiné à changer automatiquement une paire d'outils, dont l'un est une matrice fixe (7) et l'autre est un poinçon mobile (8) qui, lorsqu'ils sont établis en position d'usinage, sont tous deux couplés par l'unité de maintien de matrice ou de poinçon respective (3, 4) sur l'axe fonctionnel vertical commun (Y) de la machine à découper et à grignoter, un magasin étant muni d'un moyen de transporteur destiné à transporter les outils (7, 8) et à amener la paire d'outils sélectionnée en position d'usinage, dans laquelle leur axe (X) est amené à coïncider avec l'axe fonctionnel de la machine (Y), ledit moyen de transporteur étant conçu de sorte que les outils sont déplacés suivant un trajet fermé, leurs axes (X) étant pratiquement maintenus dans un plan passant par ledit axe fonctionnel (Y) de la machine à découper et à grignoter, caractérisé en ce que
a) deux magasins principaux (5, 6) sont prévus, un (5) pour les matrices (7) et un (6) pour les poinçons (8),
b) chaque magasin (5, 6) est muni d'un moyen de transporteur associé transportant uniquement les matrices (7), respectivement uniquement les poinçons (8),
c) le trajet de chaque moyen de transporteur présente une section de trajet le long de laquelle les outils correspondants (matrices et poinçons) passent par une position dans laquelle un poinçon et une matrice sont agencés suivant une relation superposée verticalement, et leurs axes sont alignés avec l'axe fonctionnel de la machine.

2. Machine à découper et à grignoter selon la revendication 1, dans laquelle les deux magasins principaux (5, 6) comprennent une paire de chaînes respectives (9, 10) ou tout autre moyen analogue, qui portent une pluralité de pinces de saisie espacées régulièrement (13) maintenant chacune une cartouche de matrice ou de poinçon (14), lesdites chaînes (9, 10), qui sont agencées en une relation légèrement décalée, étant amenées à circuler dans des plans parallèles, d'où il résulte que les outils (7, 8) sont transportés en conservant leurs axes (X) dans une direction fixe, de sorte que ces outils sont empêchés de se retourner, et que le fait de prévoir un moyen quelconque de fixation d'outil et de cartouche (14) est ainsi inutile.

3. Machine à découper et à grignoter selon la revendication 2, dans laquelle, à proximité de la feuille (L) à usiner, lesdites chaînes de transporteur (9, 10) sont conduites le long d'un trajet tel que les outils qui sont contigus à l'outil en fonctionnement sont établis, par rapport à l'outil en fonctionnement respectif, à un niveau différent qui est généralement un niveau légèrement plus bas ou plus élevé, conformément au fait que les outils contigus sont des matrices (7) ou des poinçons (8), ceci afin de ne pas gêner le mouvement des pinces de saisie (41) maintenant la feuille (L).

4. Machine à découper et à grignoter selon les revendications précédentes, dans laquelle l'un ou l'autre des deux magasins d'outils principaux (5, 6) comprend un dispositif d'actionneur respectif (21) qui est placé à proximité de l'unité de maintien de matrice ou de poinçon associée (3, 4), et est destiné à amener les pinces de saisie (13) à être chacune ouverte et refermée, une fois que l'outil (7 ou 8) maintenu par l'une desdites pinces de saisie (13) a été amené en position d'usinage.

5. Machine à découper et à grignoter selon les revendications 1 à 4, dans laquelle les pinces de saisie (13) sont chacune formées d'une paire d'éléments de pince de saisie plats et opposés (15) qui sont articulés autour des extrémités d'une pièce transversale de support de pince de saisie (16), et sont interconnectés par un ressort (17) tendant à basculer les éléments de pince de saisie (15) des pinces de saisie (13) l'un vers l'autre, les éléments de pince de saisie (15) devant être engagés dans une rainure annulaire périphérique (114) dans la cartouche de matrice ou de poinçon respective (14), de sorte qu'ils maintiennent cet outil en le serrant entre eux, grâce à la sollicitation du ressort (17).

6. Machine à découper et à grignoter selon la revendication 5, dans laquelle un levier s'étendant vers l'intérieur (215) est prévu respectivement pour l'un ou l'autre des deux éléments de pince de saisie (15) de chaque pince de saisie (13), lesdits leviers (215) étant amenés à buter, grâce à la sollicitation du ressort (17), contre la pièce transversale de support de pince de saisie (16), d'où il résulte que les éléments de pince de saisie seront maintenus à l'état ouvert de façon appropriée.

7. Machine à découper et à grignoter selon les revendications 4 à 6, dans laquelle ledit dispositif d'actionneur (21) comprend une tête tronconique (121) qui est fixée au corps d'un vérin actionné pneumatiquement ou hydrauliquement (221), et ladite tête (21) doit être engagée entre les leviers (215) destinés à une paire d'éléments de pince de saisie (15) d'une pince de saisie (13), de sorte que la tête (21) amène cette pince de saisie (13) à être ouverte.

8. Machine à découper et à grignoter selon les revendications 1 à 7, dans laquelle la pièce transversale (16) destinée à supporter chaque pince de saisie (13) est fixée à la première extrémité d'une tige (18) portée par l'une des deux chaînes de transporteur (9, 10), alors que l'autre extrémité de la tige est reliée à l'aide d'une liaison intermédiaire (19) à un pivot (20) adapté sur l'autre chaîne.

9. Machine à découper et à grignoter selon la revendication 5, dans laquelle au moins l'un des éléments de pince de saisie (15) de chaque pince de saisie (13) comporte une petite encoche (315) formée dans le bord latéral intérieur de celui-ci, destiné à une broche radiale correspondante (214) fixée à l'extérieur de la cartouche de matrice ou de poinçon (14) maintenue par une pince de saisie (13), qui doit s'engager dans ladite encoche (315), d'où il résulte que la cartouche est empêchée de se retourner dans la pince de saisie respective (13).

10. Machine à découper et à grignoter selon les revendications précédentes, dans laquelle des moyens sont prévus pour centrer et verrouiller la paire d'outils (7, 8) établie en position d'usinage, avec l'unité de maintien de matrice ou de poinçon respective (3, 4).

11. Machine à découper et à grignoter selon la revendication 10, dans laquelle les moyens destinés à centrer la cartouche (14) d'une matrice (7) établie en position d'usinage comprennent un manchon (22) qui est adapté de façon coulissante dans l'espace vide à l'intérieur du corps tubulaire (103) constituant l'unité de maintien de matrice (3), et peut être déplacé d'une position inactive dans laquelle le manchon (22) est entièrement logé dans ledit corps tubulaire (103), vers une position active dans laquelle le manchon (22) est amené à saillir de celui-ci par sa section d'extrémité conique (122), de sorte que ledit manchon (22) s'engagera dans ladite cartouche de matrice (14) et la centrera, ou vice versa.

12. Machine à découper et à grignoter selon la revendication 11, dans laquelle le moyen destiné à amener le manchon 20 à coulisser vers le haut et vers le bas comprend un piston consistant en une bride annulaire périphérique (222) formée dans ledit manchon (20), et reçue dans une chambre respective (113), formée dans le corps tubulaire (103) de l'unité de maintien de matrice (3), et étant alimenté de façon appropriée avec du fluide sous pression.

13. Machine à découper et à grignoter selon les revendications 11 et 12, dans laquelle le manchon (20) est relié à un actionneur (23) qui amène sur commande le manchon (20) à tourner autour de son axe (Y), d'où il résulte que la position angulaire de la matrice en fonctionnement (7) peut être changée, un moyen étant prévu pour empêcher toute rotation relative entre le manchon (20) et la cartouche de matrice (14).

14. Machine à découper et à grignoter selon la revendication 13, dans laquelle le moyen destiné à verrouiller le manchon (20) sur une cartouche de matrice (14) de façon à empêcher toute rotation relative entre ceux-ci, comprend une broche axiale (26) qui est adaptée dans le rebord de la section d'extrémité conique de manchon (122) et est destinée à s'engager dans un évidement correspondant (314) formé dans la cartouche de matrice (14), lorsque le manchon (20) est associé à celle-ci.

15. Machine à découper et à grignoter selon la revendication 13, dans laquelle, au moyen d'une paire d'engrenages (24, 25), le manchon (20) est relié à l'actionneur d'entraînement de manchon (23), l'un (24) desdits engrenages étant solidarisé avec l'arbre rotatif (230) dudit actionneur (23), et l'autre (25) étant adapté de façon coulissante mais non rotative sur ledit manchon (20) au moyen de dentelures appropriées respectives (422, 125).

16. Machine à découper et à grignoter selon la revendication 10, dans laquelle le moyen destiné à verrouiller la cartouche (14) d'une matrice (7) qui a été établie en position d'usinage, comprend deux pinces (27) placées dans des positions diamétralement opposées sur l'unité de maintien de matrice (3), à proximité d'une bride annulaire de support de cartouche (514), et qui sont alignées l'une avec l'autre sur l'axe longitudinal de la machine, lesdites pinces (27) étant mobiles verticalement vers le haut et vers le bas sur une courte distance, d'où il résulte que ladite bride (514) peut être verrouillée contre le rebord du corps tubulaire (103) de l'unité de maintien de matrice (3) et être libérée de celui-ci.

17. Machine à découper et à grignoter selon la revendication 16, dans laquelle le moyen destiné à déplacer vers le haut et vers le bas lesdites pinces (27) comprend une unité d'actionneur à vérin et piston actionnée de façon hydraulique ou pneumatique (143, 129) qui est reliée à celle-ci par l'intermédiaire d'axes respectifs (28), la chambre (143) dans le vérin de ladite unité d'actionneur étant formée dans la jupe du corps tubulaire (103) de l'unité de maintien de matrice (3), et le piston associé étant formé par une projection annulaire vers l'intérieur (129) d'un écrou à oeillet (29) adapté sur ledit corps tubulaire (103).

18. Machine à découper et à grignoter selon la revendication 10, dans laquelle le moyen destiné à verrouiller la cartouche (14) d'un poinçon (8) qui a été établi en position d'usinage, comprend une paire de crochets (30) agencés sur l'unité de maintien de poinçon (4) dans des positions diamétralement opposées, à proximité d'une bride annulaire (330) destinée à porter la cartouche de poinçon (4) sur celle-ci, et qui sont alignés l'un avec l'autre sur l'axe longitudinal de la machine, lesdits crochets (30) étant mobiles verticalement vers le haut et vers le bas sur une courte distance, d'où il résulte que ladite bride (330) se trouvera verrouillée contre le corps cylindrique (33) constituant le véritable support de poinçon approprié, et sera libéré de celui-ci.

19. Machine à découper et à grignoter selon les revendications 10 et 18, dans laquelle le moyen destiné à centrer la cartouche (14) du poinçon (8) qui a été établi en position d'usinage comprend un piston creux (34) adapté de façon coaxiale sur le corps cylindrique (33) de l'unité de maintien de poinçon (4), et auquel on communique un mouvement alternatif tel que l'unité de maintien de poinçon (4) sera soit engagée sur une partie d'extrémité tronconique courte (714) de la cartouche de poinçon (14), et sera ainsi centrée avec celle-ci, soit se trouvera désengagée de celle-ci.

20. Machine à découper et à grignoter selon les revendications 18 et 19, dans laquelle le moyen destiné à déplacer les crochets (30) et le manchon (102) comprennent deux pistons creux coaxiaux (31, 34) adaptés l'un dans l'autre, le piston interne (34) faisant partie intégrale du manchon (102), et le piston externe (31) qui porte les crochets (30), étant reçu dans la chambre (132) d'un vérin (32) qui est fixé de façon coaxiale au corps (33) de l'unité de maintien de poinçon (4), la chambre (134) du piston creux interne (34) étant refermée par une bride annulaire périphérique respective (330) formée dans ledit corps (33), et étant mise en communication avec la chambre (132) dans le vérin (32), de sorte qu'en alimentant du fluide sous pression dans la chambre (131) dans le piston externe (31), les crochets (30) et le manchon (102) sont attirés à proximité l'un de l'autre, et lesdits crochets (30) verrouillent et centrent ainsi la cartouche de poinçon (14), alors qu'en alimentant du fluide sous pression dans la chambre (132) dans le verin (32), et donc dans la chambre (134) dans le piston interne (34), les crochets (30) et le manchon (20) sont écartés l'un de l'autre et la cartouche de poinçon (14) se trouve ainsi libérée.

21. Machine à découper et à grignoter selon les revendications 18 à 20, dans laquelle l'unité de maintien de poinçon (14) est adaptée à une première extrémité sur un arbre (36) qui, en dehors du fait de recevoir un mouvement alternatif, est entraîné en rotation de manière à permettre que la position angulaire du poinçon en fonctionnement (8) soit changée, un moyen étant prévu pour empêcher toute rotation relative entre la cartouche de poinçon (14) et l'unité de maintien de poinçon (4).

22. Machine à découper et à grignoter selon les revendications 19 à 21, dans laquelle le moyen destiné à verrouiller une cartouche de poinçon (14) à l'unité de maintien de poinçon (4) de façon à empêcher toute rotation relative entre celles-ci, comprend un tenon axial (234) adapté dans le piston creux (34), et qui est destiné à s'engager dans un évidement correspondant (614) formé dans la bride de cartouche (514), à chaque fois que ces éléments (14, 4) seront reliés l'un à l'autre.

23. Machine à découper et à grignoter selon la revendication 21, dans laquelle ledit arbre (36) est relié par l'intermédiaire d'une paire d'engrenages (39, 40) à un actionneur (38) destiné à entraîner ledit arbre (36) en rotation, le premier engrenage (39) étant fixé sur ledit arbre rotatif (36) dudit actionneur (38), et l'autre engrenage (40) étant relié directement audit actionneur (38), lesdits engrenages (39, 40) étant en engagement engrené l'un avec l'autre par l'intermédiaire d'un moyen approprié permettant à l'arbre (36) d'être déplacé axialement vers le haut et vers le bas.

24. Machine à découper et à grignoter selon l'une quelconque ou plusieurs des revendications précédentes, caractérisée en ce que celle-ci comprend une paire de magasins supplémentaires (42, 43) dont l'un (42) porte un ensemble de matrices (7) et l'autre (43) un ensemble correspondant de poinçons (8), un moyen étant prévu pour transférer automatiquement les outils (7, 8) depuis ces magasins supplémentaires (42, 43) vers les magasins principaux (5, 6) dans la machine à découper et à grignoter, et vice versa.

25. Machine à découper et à grignoter selon la revendication 24, dans laquelle chaque magasin supplémentaire (42, 43) comprend un transporteur à chaîne sans fin (45) muni d'une pluralité de pinces de saisie (44) destinées à maintenir les outils (7, 8).

26. Machine à découper et à grignoter selon les revendications 24 et 25, dans laquelle le moyen (47) destiné à transférer les outils (7, 8) de l'un des deux magasins supplémentaires (42, 43) vers le magasin principal respectif (5, 6), et vice versa, comprend un bras horizontal (48) porté de façon centrale par un arbre rotatif vertical (49) et portant à ses sections d'extrémité deux pinces de saisie (50) qui s'étendent vers l'extérieur depuis les côtés opposés dudit bras (48), et peuvent être translatées transversalement à celui-ci, l'agencement complet étant tel que les outils désirés (7, 8) seront chacun retirés simultanément de l'un ou l'autre des deux magasins de matrice (42, 5) et magasins de poinçons (43, 6) qui ont été associés de façon fonctionnelle l'un à l'autre, après quoi ledit bras (48) sera mis en rotation sur un demi-tour et les outils retirés (7, 8) seront alors transférés dans les magasins de matrices ou de poinçons respectifs (5, 42 ; 6, 43), de sorte qu'un changement d'outils (7, 8) sera alors effectué.

27. Machine à découper et à grignoter selon la revendication 26, dans laquelle l'une ou l'autre des deux pinces de saisie (50) est fixée à une extrémité d'une paire d'axes (51) qui sont reçus de façon coulissante dans des alésages de traversée respectifs (148) formés dans les extrémités du bras portant les pinces de saisie (48), le mouvement de translation desdites pinces de saisie (50) étant communiqué par un actionneur linéaire associé (52) mis en oeuvre hydrauliquement ou pneumatiquement.

28. Machine à découper et à grignoter selon les revendications 26 et 27, dans laquelle chaque pince de saisie (50) est constituée de deux éléments de pince de saisie opposés, qui sont adaptés de façon basculante sur une pièce transversale de support (16), et sont interconnectés par un piston actionné de façon hydraulique ou pneumatique (50) afin de commander leurs mouvements d'ouverture et de fermeture, lesdites pinces de saisie (50) devant être engagées dans une seconde rainure annulaire périphérique (814) formée dans chaque cartouche de matrice ou de poinçon (14).

29. Machine à découper et à grignoter selon la revendication 25, dans laquelle les pinces de saisie (44) destinées à maintenir les outils (7, 8) dans les magasins supplémentaires (42, 43) sont de construction exactement identique aux pinces de saisie (13) prévues dans les magasins principaux (5, 6).
